(19) Europäisches Patentamt
European Patent Office
Office européen des brevets

(11) **EP 3 778 188 A1**

(12) **EUROPEAN PATENT APPLICATION**
published in accordance with Art. 153(4) EPC

(43) Date of publication:
**17.02.2021 Bulletin 2021/07**

(21) Application number: **19775484.9**

(22) Date of filing: **01.04.2019**

(51) Int Cl.:
***B29C 59/02*** (2006.01)   ***B29C 59/04*** (2006.01)

(86) International application number:
**PCT/JP2019/014522**

(87) International publication number:
**WO 2019/189933 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2018  JP 2018068412**
**30.03.2018  JP 2018068457**

(71) Applicant: **Dai Nippon Printing Co., Ltd.**
**Shinjuku-ku,**
**Tokyo 162-8001 (JP)**

(72) Inventors:
• **NISHINE, Shouta**
**Tokyo 162-8001 (JP)**
• **OGASAWARA, Takeru**
**Tokyo 162-8001 (JP)**
• **OOTAKE, Kazuha**
**Tokyo 162-8001 (JP)**
• **NAKAMURA, Katsuji**
**Tokyo 162-8001 (JP)**

(74) Representative: **Müller-Boré & Partner**
**Patentanwälte PartG mbB**
**Friedenheimer Brücke 21**
**80639 München (DE)**

(54) **DECORATIVE MATERIAL AND METHOD FOR PRODUCING DECORATIVE MATERIAL**

(57)    A decorative material provided with irregularities formed on a surface, including a base material and a striated portion in which a plurality of convex striations or concave striations are arranged on a surface of the base material, wherein each of the convex striations or concave striations has a finite length in a planar view, has a curved portion, and has a pattern in which the plurality of convex striations or concave striations of the striated portion have a fingerprint resistance represented by a color difference $\Delta E$ of 1.50 or less.

FIG.2

**Description**

Technical Field

The present invention relates to decorative materials, and more particularly, to decorative materials in which fingerprints are hardly conspicuous (having fingerprint resistance).

Background Art

Decorative materials are widely used as materials to decorate surfaces of furniture, building materials, and the like. For example, Patent Literature 1 discloses a technique relating to a decorative material made of a melamine resin. Decorative materials made of melamine resin have advantages such as excellent heat resistance, flaw resistance, stain resistance, and the like, and has characteristics of good productivity.

Citation List

Patent Literature

Patent Literature 1:JP S58-197053 A

Summary of Invention

Technical Problem

However, there is a problem that a trace of a fingerprint is conspicuous when such decorative materials made of melamine resin are touched by a hand, and fingerprint resistance is low. In particular, the tendency was remarkable in the decorative materials having matte surfaces, so-called low gloss, which is formed by shaping concavo-convex shapes such as stain-like shape and sand grain shape on the surface.

Although it is also possible to make the trace of the fingerprint inconspicuous by changing the material of the decorative material to a resin other than the melamine resin (improving the fingerprint resistance), there is a problem that the productivity decreases in any of the materials.

Accordingly, an object of the present invention is to provide a decorative material having fingerprint resistance in which traces of fingerprints are hardly noticeable regardless of the type of material. Further, a method for manufacturing this decorative material is provided.

Solution to Problem

One aspect of the present invention is a decorative material provided with irregularities formed on a surface, the decorative material includes a base material, and a striated portion in which a plurality of convex striations or concave striations are arranged on a surface of the base material, whererin each of the convex striations or each of the concave striations has a finite length in a planar view, and has a curved portion, and the plurality of convex striations or concave striations of the striated portion have a pattern to have a fingerprint resistance represented by the color difference $\Delta E$ is 1.50 or less.

Here, the color difference $\Delta E$ means "the color difference $\Delta E^*ab$ in $L^*a^*b^*$ color space".

Then, an indicator of "fingerprint resistance represented by color difference $\Delta E$" means that a decorative material made of melamine resin is prepared, and a fingerprint resistance is represented by a color difference $\Delta E$ between a surface after one dropping of oleic acid is added to the surface thereof and then ten reciprocating dry wiping is performed with a cloth of a cotton material, and a surface before the dropping. Therefore, the distance between the color in $L^*a^*b^*$ color space of the surface prior to the dropping of oleic acid and the color in $L^*a^*b^*$ color space of the surface after the dropping of oleic acid and the dry wiping as described above is $\Delta E$ ($\Delta E^*ab$).

It may be configured such that the plurality of convex striations or concave striations of the striated portion have a Turing pattern.

The base material and the striated portion may also be configured to include a melamine resin.

Another aspect of the present invention is a method of manufacturing the decorative material described above, including: a step of forming gray scale image data of a pattern of convex striations or concave striations to be represented in a decorative material; a step of making a die having the same pattern of convex striations or concave striations as a pattern of convex striations or concave striations based on the gray scale image data; a step of forming a shaped sheet by applying an ink on a side where the convex striations or the concave striations are provided with the ink and curing the ink; and a step of laminating the shaped sheet on a sheet impregnated with a resin and heating and molding the sheet while applying a pressure to the sheet.

Advantageous Effects of Invention

According to the present invention, it is possible to provide a decorative material in which traces of fingerprints are hardly conspicuous regardless of the material used.

Brief Description of Drawings

FIG. 1 is a plan view showing an enlarged portion of the surface of a decorative material 10.

FIG. 2 is a perspective view showing a portion of the decorative material 10 schematically represented for explaining the surface of the decorative material 10.

FIG. 3 is a view illustrating an example of an embodiment of a convex striation 13.

FIG. 4 is a view illustrating another example of an embodiment of the convex striation 13.

FIG. 5 is a view illustrating another example of an embodiment of the convex striation 13.

FIG. 6 is a view illustrating another example of an embodiment of the convex striation 13.

FIG. 7 is a view illustrating another example of an embodiment of the convex striation 13.

FIG. 8 is a view illustrating another example of an embodiment of the convex striation 13.

FIG. 9 is a view illustrating another example of an embodiment of the convex striation 13.

FIG. 10 is a view illustrating an example of an arrangement of adjacent convex striations 13.

FIG. 11 is a view illustrating an example of an arrangement of adjacent convex striations 13.

FIG. 12 is a perspective view showing a portion of a decorative material 20 schematically shown for explaining a surface of the decorative material 20.

FIG. 13 is a view illustrating an example of an embodiment of a concave striation 23.

FIG. 14 is a view illustrating another example of an embodiment of the concave striation 23.

FIG. 15 is a view illustrating another example of an embodiment of the concave striation 23.

FIG. 16 is a view illustrating another example of an embodiment of the concave striation 23.

FIG. 17 is a view illustrating another example of an embodiment of the concave striation 23.

FIG. 18 is a view illustrating another example of an embodiment of the concave striation 23.

FIG. 19 is a view illustrating another example of an embodiment of the concave striation 23.

FIG. 20 is a view illustrating an example of an arrangement of adjacent concave striations 23.

FIG. 21 is a view illustrating an example of an embodiment of adjacent concave striations 23.

FIG. 22 is a view illustrating a die 30.

FIG. 23 is a plan view showing an enlarged portion of the surface of the decorative material of Comparative Example.

Description of Embodiments

Hereinafter, each embodiment will be described based on the drawings. However, the present invention is not limited to these embodiments. In the drawings shown below, the size and ratio of the members may be changed or exaggerated for clarity. In the drawings shown below, the size and ratio of the members may be changed or exaggerated for clarity.

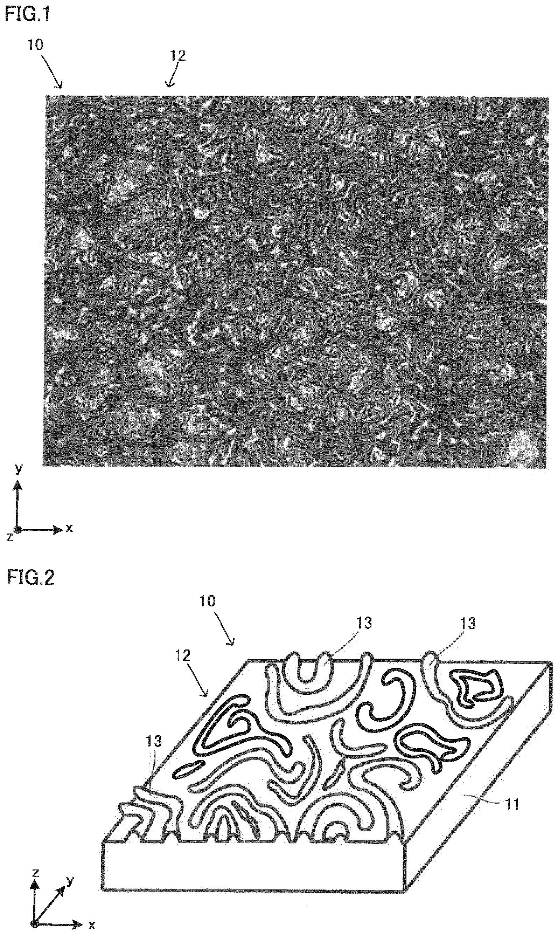

FIG. 1 is a plan view, in which a portion of the decorative material 10 according to a first embodiment is enlarged and seen from the side of the striated portion 12. For convenience, the arrows (x, y, and z) representing the directions, i.e., the coordinate system, are also shown in FIG. 1. Here, xy direction is the in-plane direction of the surface in the decorative material 10, z direction is the thickness direction and also the normal direction of an xy plane representing the spread of the in-plane direction of the decorative material. Accordingly, FIG. 1 is a view of the decorative material 10 seen from the z direction (normal direction with respect to the xy plane) that is on the striated portion 12 side. It is noted that an observation of the decorative material from the thickness direction (z direction) of the decorative material as in FIG.1 may be referred to as a planar view and a drawing illustrating the planar view may be referred to as a plan view.

As can be seen from FIG. 1, in the decorative material 10 of the embodiment, irregularities due to the striated portion 12 are formed on the surface side where can be seen and touched.

FIG. 2 is a perspective view schematically showing a part of FIG. 1, where the part of FIG. 1 is extracted and enlarged. As can be seen from FIGs. 1 and 2, the decorative material 10 includes a base material 11 and a striated portion 12 formed on one surface of the base material 11.

Hereinafter each structure will be explained in more detail.

The base material 11 is a sheet-like member which serves as a base of the striated portion 12 and has a function of imparting strength to the decorative material 10. Since the base material 11 may have a function similar to that of a conventionally known decorative material, the material thereof is not particularly limited. For example, as a material of the base material, polyolefin-based resins such as polyethylene, polypropylene, olefin-based thermoplastic elastomers, and ionomers; acrylic resins such as polymethylmethacrylate, and polybutyl methacrylate; thermoplastic polyester resins, such as polyethylene terephthalate, and polybutylene terephthalate; thermoplastic resins such as thermoplastic urethane resins, vinyl chloride resins, ABS resins (acrylonitrile-butadiene-styrene copolymer), and styrene resins; thermosetting resins such as melamine resins, unsaturated polyester resins, and two-part curing type urethane resins, radical polymerization type acrylate-based or cationic polymerization type epoxy-based ionizing radiation curable resins that are cured by ionizing radiation (ultraviolet rays, electron beams, or the like) and the like can be used. It is noted that, when the material of the base material is a resin, it may be colored with a known colorant.

In addition, papers, nonwoven fabrics, metals, woods, and the like may also be used in the form of a sheet, a plate, a three-dimensional object, or the like, and laminated with the above-mentioned resin materials as appropriate.

Thus, in the decorative material 10, fingerprint resistance can be improved without selecting a material to be used.

Among these, a base material including a so-called melamine resin decorative material formed by impregnating paper with an uncured liquid composition of a melamine resin and curing it, which has been conventionally utilized, can be used, in view of heat resistance, flaw resistance, and productivity thereof. A general melamine resin decorative material is formed in the layer structure and by the manufacturing method shown below. Two to five core papers each obtained by impregnating a kraft paper having a basis weight $50g/m^2$ or more and a $250g/m^2$ or less with an uncured composition of a phenol-based resin are superposed, and a titanium paper having a basis weight $50g/m^2$ or more and a $250g/m^2$ or less (a paper obtained by mixing titanium dioxide particles as a white concealable pigment) impregnated with an uncured composition of a melamine resin is superposed on a surface side of a stack of the core papers (the side exposed and visually recognized at the time of use), and further, an overlay paper impregnated with an uncured composition of a melamine resin is superposed on an $\alpha$ cellulose pulp paper having a basis weight of $15g/m^2$ to $50g/m^2$ on the surface side of a stack of the core papers and the titanium paper. Then, the superposed one is heated and pressurized to cure each uncured composition and to obtain a stack in which each layer is bonded and integrated. Such a stack is a melamine resin decorative material.

According to the decorative material 10 in which the striated portion 12 is shaped on the surface side of the base material 11 of the structure of such a melamine resin decorative material, it is possible to improve fingerprint resistance even when a melamine resin is used as a material.

It is noted that, as the layer structure of the melamine resin decorative material, a form in which a part of the layer of the above-described stack structure is omitted may be used depending on the required performance, price, application, and the like. Alternatively, with respect to the stack structure described above, it is also possible to have a structure in which various layers are added.

As a layer to be added, a titanium paper (also referred to as a balance paper) impregnated with a melamine resin can be laminated on the side opposite to the side of a decorative paper of the core paper in the laminated structure in order to offset the warpage of the melamine resin decorative material in which the different materials are laminated. In addition, in order to improve concealability of the melamine resin decorative material, a titanium paper impregnated with a melamine resin (also referred to as a barrier paper) can be laminated between the decorative paper and the overlay paper in the laminated structure.

From the above viewpoint, a typical example of the stack structure of the melamine resin decrative material is as follows.

(1) Core paper (number of layers as appropriate) / melamine resin impregnated decorative paper / overlay paper (laminated structure as described above)
(2) Melamine resin impregnated balance paper / core paper (number of layers as appropriate) / melamine resin impregnated decorative paper / overlay paper
(3) Core paper (number of layers as appropriate) / melamine resin impregnated decorative paper / melamine resin impregnated barrier paper / overlay paper
(4) Melamine resin impregnated balance paper / core paper (number of layers as appropriate) / melamine resin impregnated decorative paper / melamine resin impregnated barrier paper / overlay paper
(5) Overlay paper only (number of layers as appropriate)
(6) Melamine resin impregnated decorative paper only (number of layers as appropriate)
(7) Melamine resin impregnated decorative paper / overlay paper

Although there is no particular limitation on the thickness of the base material, in the case of a sheet-like base material or a film-like base material, for example, a sheet-like or film-like base material having a thickness of about 20 $\mu$m to 1000 $\mu$m, and in the case of a plate-like base material, for example, one having a thickness of about 1 mm to 20 mm can be used.

The striated portion 12 is formed on one surface of the base material 11, and imparts fingerprint resistance to the surface of the decorative material 10. In this embodiment, the striated portion 12 has the following form.

As can be seen from FIGs. 1 and 2, the striated portion 12 is formed by a plurality of convex striations 13 having a finite length arranged innumerably. In this embodiment, a fingerprint-resistant function is imparted to the decorative material 10 by the convex striations 13 arranged innumerably.

Further, with the arrangement of an infinite number of the convex striations 13 having a finite length as described above on the surface, the convex striations 13 diffuse and reflect the incident light, which is also possible to make the surface be a so-called matte surface. Among the decorative materials having matte surface irregularities such as conventional stain-like shape and sand grain shape, particularly those using a melamine resin have a problem in that a trace of a fingerprint is remarkably conspicuous on such a matte surface and fingerprint resistance is low. In contrast, according to the decorative material 10 of this embodiment, even if the surface is matted by the striated portion 12, fingerprint resistance can be improved. It is noted that the matting evaluation can be performed by measuring the gloss using a gloss meter (60 degrees, measurement instrument BYK Gardner Co., Ltd., Microgloss) of a decorative material which is shaped with a shaped sheet.

As for the form of the plurality of convex striations 13 provided in the striated portion 12 and the arrangement thereof, it is only necessary to be formed to have fingerprint resistance. In other words, by providing a plurality of convex striations 13, fingerprint resistance is improved.

Here, the fingerprint resistance means the noticeability of the trace of the fingerprint, and the trace of the fingerprint becomes inconspicuous due to the fingerprint resistance. As a specific index of the fingerprint resistance, it is evaluated with the color difference $\Delta E$, and it is sufficient when the $\Delta E$ is 1.5 or less, and when $\Delta E$ is 1.0 or less, the fingerprint resistance is good, and when $\Delta E$ is 0.2 or less, it can be evaluated as having a high fingerprint resistance.

Here, the color difference $\Delta E$ means "the color difference $\Delta E^*ab$ in $L^*a^*b^*$ color space", and the index of the fingerprint resistance expressed by the color difference $\Delta E$ means that the fingerprint resistance is expressed by the color difference $\Delta E$ ($\Delta E^*ab$) between the surface after making a decorative material using a melamine resin, dropping one drop of oleic acid on the surface, and ten reciprocating dry wiping with a cloth of cotton material, and the surface before the dropping. Therefore, the distance between the color in $L^*a^*b^*$ color space of the surface prior to the dropping of oleic acid and the color in $L^*a^*b^*$ color space of the surface after the dropping of oleic acid and the dry wiping as described above is $\Delta E$ ($\Delta E^*ab$). Such a color difference can be measured, for example, by Konica Minolta Co., Ltd., spectrocolorimeter CM-370, or the like.

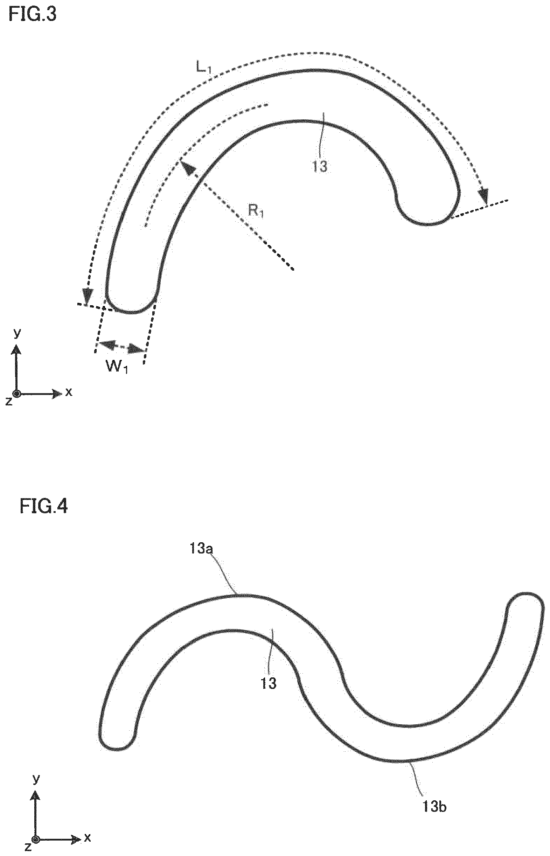

The form of the convex striations 13 for having such fingerprint resistance is a striation projection each having a curved portion of a finite length as can be seen from FIG 1. FIG. 3 shows a plan view focusing on the example of one convex striation 13. In this embodiment, the striated portion 12 is formed as an aggregation in which such convex striations 13 are arranged innumerably.

From the viewpoint of further enhancing the fingerprint resistance, it is preferable that the convex striation have the following form.

A width $W_1$ is the distance of the shortest straight line connecting one edge of the convex striation and the other edge of the convex striation, via the highest point of the convex striation, when the convex striation is in a planar view. This width $W_1$ may be 1 $\mu$m to 100 $\mu$m, and may be 1 $\mu$m to 25 $\mu$m.

A height H is Rz when measured by a surface roughness measuring instrument (JIS B 0601-2001, measuring instrument: two-dimensional, three-dimensional surface roughness measuring instrument, Ryoko Co., Ltd.). This height H may be 1 $\mu$m to 100 $\mu$m, and may be 5 $\mu$m to 50 $\mu$m.

A radius-of-curvature $R_1$ is the average value obtained by measuring 10 curved portions per convex striation for five convex striations. This radius-of-curvature $R_1$ may be 1 $\mu$m to 50 $\mu$m, and may be 1 $\mu$m to 25 $\mu$m.

A length $L_1$ may be 1 $\mu$m to 500 $\mu$m, and may be 1 $\mu$m to 250 $\mu$m.

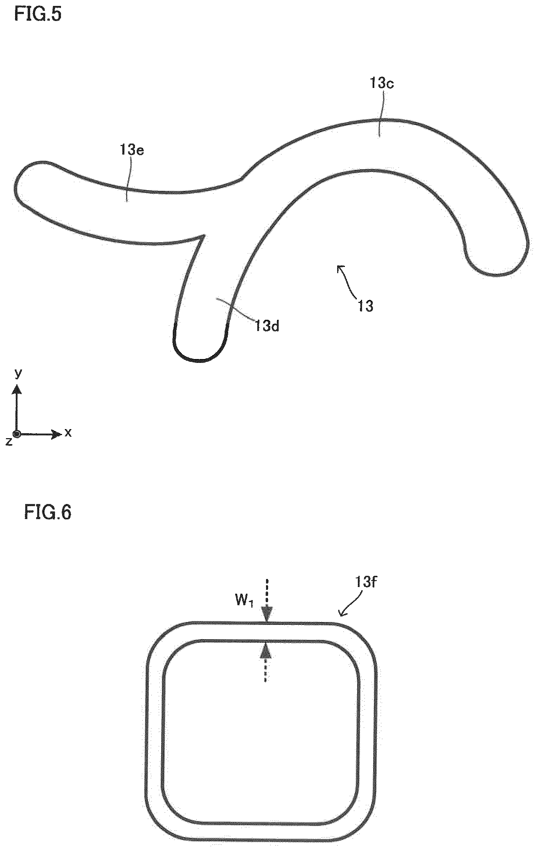

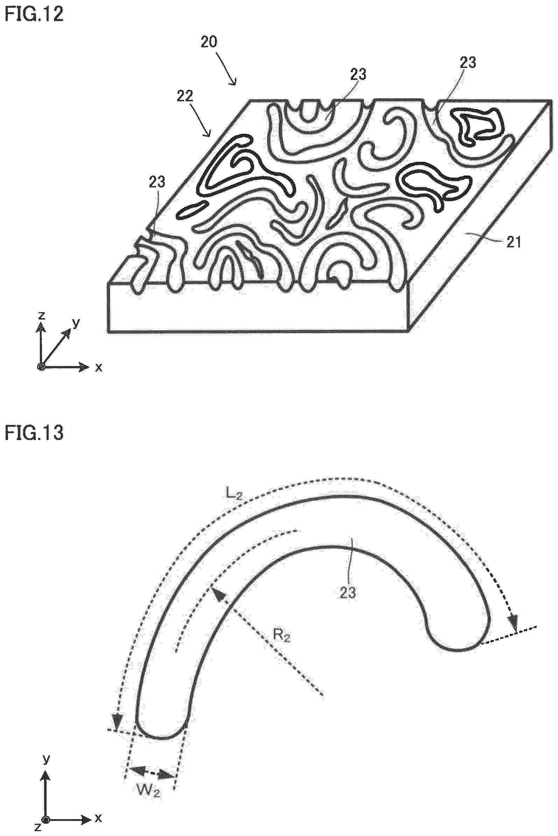

Thus, each convex striation 13 has a curved portion having a predetermined width $W_1$ with a finite length (width $W_1 > 0$), and such convex striations 13 may include convex striations 13 of FIGs. 4 and 5, for example, in addition to the striation 13 shown in FIG. 13.

The convex striation 13 shown in FIG. 4 is a so-called wave shape which is one example extending with one pole portion 13a having an inclination of 0 (corresponding to the maximum point or the minimum point in the curve), and a pole portion 13b which is a different pole portion from the pole portion 13a. Such wavy striations 13 may be included.

The range of length, width, height, and radius-of-curvature of the wavy convex striations 13 can also be considered in the same way as described in the convex striation 13 shown in FIG. 3.

Convex striation 13 shown in FIG. 5 is one example that has branches which are a first branch 13d from a base portion 13c which is one, and a second branch 13e. The convex striation 13 having such branches may be included.

Preferred ranges of width, height, and radius-of-curvature for convex striation 13 having branches are the same as described for the convex striation 13 shown in FIG. 3. On the other hand, for the length of each convex striation 13 having branches, each of the total length of the base portion 13c and the first branch 13d, and the total length of the base portion 13c and the second branch 13e may be the range described in the convex striation 13 shown in FIG. 3.

A planar view shape of the convex striation 13 includes a circle, ellipse, polygon where the vicinity of the apex is rounded (radius-of-curvature > 0), and a closed curve 13f which is a shape obtained by modulating them, as shown in FIGs 6 to 9. Such closed curve 13f has the width $W_1$ in accordance with the above example.

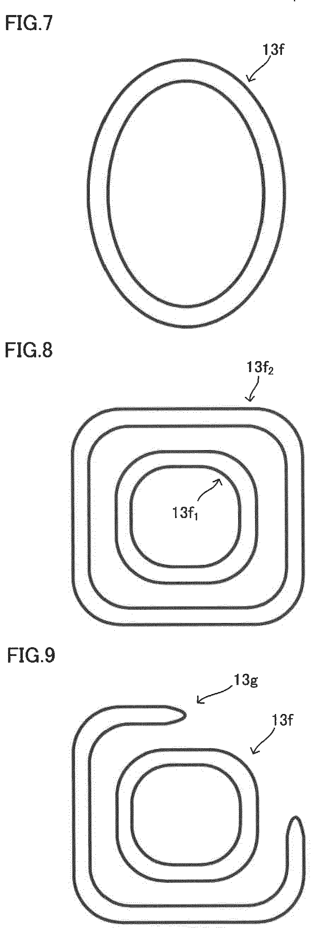

FIG. 6 is an example of the closed curve 13f where the vicinity of the apex is rounded and made of polygonal or the like, FIG. 7 is an example of the closed curve 13f made of ellipse. Such closed curves may include a closed curve $13f_1$ having a smaller diameter inside a closed curve $13f_2$ having a larger diameter as shown in FIG. 8.

Also, the closed curve 13f may be accompanied by an open curve 13g having a diameter larger than the diameter of the closed curve 13f and adjacent to the outside of the closed curve 13f as in FIG. 9. Thus, the planar view shape of the convex striation 13 may be a shape that cuts out a portion of a closed curve such as the open curve 13g of FIG. 9. Alternatively, although not shown, the planar view shape of the convex striation 13 may include a meandering shape, or folded shape into a zig zag of the convex striations shown in FIGs. 6 to 9.

In this embodiment, the convex striations 13 as described above are arranged innumerably on the surface of the base material 11 to form the striated portion 12. As for the arrangement of the plurality of convex striations 13 to the striated portion 12, any arrangement can be used as long as it can have fingerprint resistance as described above.

Although there is no particular limitation on the specific form for that purpose, the interval between adjacent convex striations 13 can be set to 1 $\mu$m to 70 $\mu$m, and can be set to 1 $\mu$m to 30 $\mu$m for example.

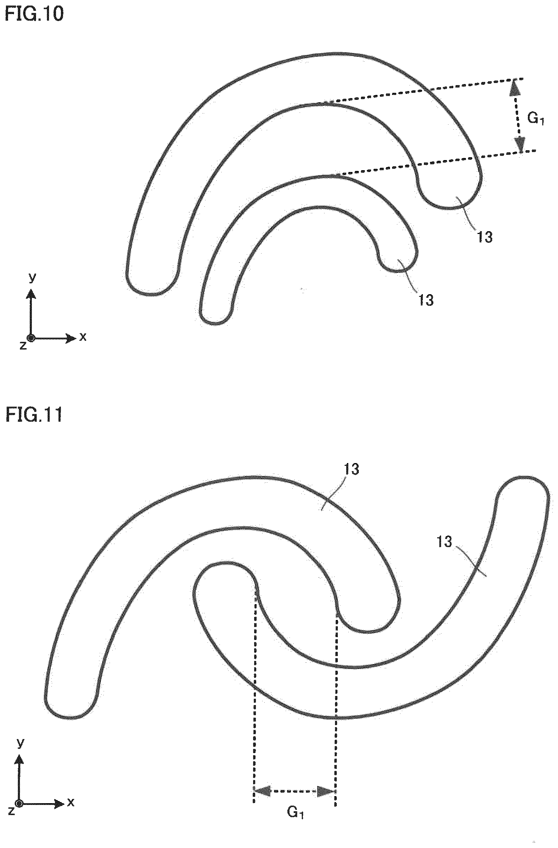

FIGs. 10 and 11 each illustrates an example of an aspect of adjacent convex striations 13.

FIG. 10 is an example in which two of the convex striations 13 each curved are arranged so that their curved directions are aligned. In such a case, the most isolated distance shown in $G_1$ in FIG. 10 may be in the range of the above intervals.

FIG. 11 is an example in which two of the convex striations 13 each curved are different in their curved directions and are arranged so that their tips enter the space made by each other's curve. In this case as well, the most isolated distance, as shown in $G_1$ in FIG. 11, can be in the range of the above intervals.

In addition, when viewed as a whole, the form of the plurality of convex striations 13 of the striated portion 12 and the arrangement thereof can be considered as follows. That is, it is also possible to form the plurality of convex striations 13 included in the striated portion 12 and the arrangement thereof by a so-called Turing pattern.

Turing patterns are spatial patterns that occur spontaneously in systems of reaction-diffusion equations.

[Mathematical formula 1]

$$\begin{cases} \dfrac{\partial u}{\partial t} = f(u,v) + D_u \nabla^2 u \\ \dfrac{\partial v}{\partial t} = g(u,v) + D_v \nabla^2 v \end{cases}$$

Here, u is the concentration of a so-called active factor, v is the concentration of a so-called inhibition factor, and Du is the diffusion coefficient of an active factor u, and Dv is the diffusion coefficient of an inhibition factor v, f(u, v) and g(u, v) are the functions of variables u, v.

This equation is originally an expression that represents the concentration u of the active factor related to positive feedback of various chemical reactions and the increase or decrease of the concentration v of the inhibition factor related to negative feedback. In the right side of the above equation, the first term is called a reaction term, and is a term for determining the amount of generation and decomposition of the active factor and the inhibition factor by the ratio of the concentration (u, v) of the active and inhibition factors. The second term is called a diffusion term, and it is a term to determine the amount of the active factor and inhibition factor which move due to a diffusion phenomenon.

This reactive diffuse equation is known to produce various patterns in the plane (u, v), depending on the diffusion coefficients Du, Dv, functions f(u, v), g(u, v), and boundary conditions. Such a pattern is referred to as a Turing pattern.

By identifying the diffusion coefficients Du, Dv, the functions f(u, v), g(u, v), and the boundary conditions, and defining the width Wi, the length $L_1$, the radius-of-curvature $R_1$, and the distance $G_1$ of the planar view shape of the convex striation 13 so that the dimensions (enlargement or reduction ratio of the pattern) is within the range as described above, and defining the height H too in the range of the pattern (hereinafter, also referred to as "specific Turing pattern") in forming the planar view of the plurality of convex striations 13 forming the striated portion 12 on the surface of the decorative material, the decorative material including the striated portion 12 having such convex striations 13 on its front can fully achieve the effect of the present invention.

According to the decorative material 10 described above, fingerprint resistance can be improved regardless of the material used in the decorative material. For example, even when a melamine resin is used as a material, the decorative material has an excellent fingerprint resistance.

Further, according to the striated portion 12 as described above, the surface of the decorative material may be provided with a matte feature. Then, even the surface of the matte has fingerprint resistance.

FIG. 12 is an enlarged perspective view in which a portion of the decorative material 20 according to a second embodiment is extracted and schematically shown, corresponding to FIG. 2. As can be seen from FIG. 12, the decorative material 20 is formed to have a base material 21 and a striated portion 22 formed on one surface of the base material 21.

The base material 21 is a sheet-like member which serves as a base of the striated portion 22 and has a function of imparting strength to the decorative material 20. The base material 21 can be considered in the same manner as in the base material 11 described above.

The striated portion 22 is formed on one surface of the base material 21 and imparts fingerprint resistance to the surface of the decorative material 20. In this embodiment, the striated portion 22 has the following configuration.

As can be seen from FIG. 12, the striated portion 22 is formed by a plurality of concave striations 23 of finite length arranged innumerably. A fingerprint-resistant function is imparted to the decorative material 20 by the concave striations 23 arranged innumerably.

Further, with the arrangement of the concave striations 23 having a finite length and arranged innumerably on the surface as described above, the concave striations 23 diffuse and reflect the incident light, which is also possible to make the surface be a so-called matte surface. Among the decorative materials having matte surface irregularities such as conventional stain-like shape and sand grain shape, particularly those using a melamine resin have a problem in that a trace of a fingerprint is remarkably conspicuous on the surface of such a matte and a fingerprint resistance is low. In contrast, according to the decorative material 20 of this embodiment, even if the surface is matted by the striated portion 22, fingerprint resistance can be improved. It is noted that evaluation of matting can be performed by measuring gloss using a gloss meter (60 degrees, measurement instrument BYK Gardner Co., Ltd., Microgloss) of a decorative material shaped with a shaped sheet.

As for the form of the plurality of concave striations 23 provided in the striated portion 22 and the arrangement thereof, it is only necessary to be configured to have fingerprint resistance. In other words, by providing a plurality of concave striations 23, fingerprint resistance is improved.

Here, the fingerprint resistance means the noticeability of the trace of the fingerprint, and the trace of the fingerprint becomes inconspicuous due to the fingerprint resistance. As a specific index of fingerprint resistance, it is evaluated with the color difference $\Delta E$, and it is sufficient when $\Delta E$ is 1.5 or less, and when $\Delta E$ is 1.0 or less, fingerprint resistance is good, and when $\Delta E$ is 0.2 or less, it can be evaluated as having high fingerprint resistance. The color difference $\Delta E$ is as described above.

The form of each of the concave striations 23 for having such fingerprint resistance is a striation groove having a curved portion of a finite length as can be seen from FIG. 12. FIG. 13 shows a plan view focusing on an example of one concave striation 23. A striated portion 22 is formed as an aggregation in which such concave striations 23 are arranged innumerably.

From the viewpoint of further enhancing the fingerprint resistance, it is preferable that each of the concave striations has the following form.

A width $W_2$ is the distance of the shortest straight lines connecting one edge of the concave striation and the other edge of the concave striation, via the deepest point of the concave striation, when the concave striation is viewed in a planar view. This width $W_2$ may be 1 $\mu$m to 100 $\mu$m, and may be 1 $\mu$m to 25 $\mu$m.

A depth F is Rz when measured with a surface roughness measuring instrument (JIS B 0601-2001, measuring instrument: two-dimensional, three-dimensional surface roughness measuring instrument, Ryoko Co., Ltd.). This depth F may be 1 $\mu$m to 100 $\mu$m, and may be 5 $\mu$m to 50 $\mu$m.

A radius-of-curvature $R_2$ is the average obtained by measuring 10 curved portions per convex striation for five concave striations. This radius-of-curvature $R_2$ may be 1 $\mu$m to 50 $\mu$m, and may be 1 $\mu$m to 25 $\mu$m.

A Length $L_2$ may be 1 $\mu$m to 500 $\mu$m, and may be 1 $\mu$m to 250 $\mu$m.

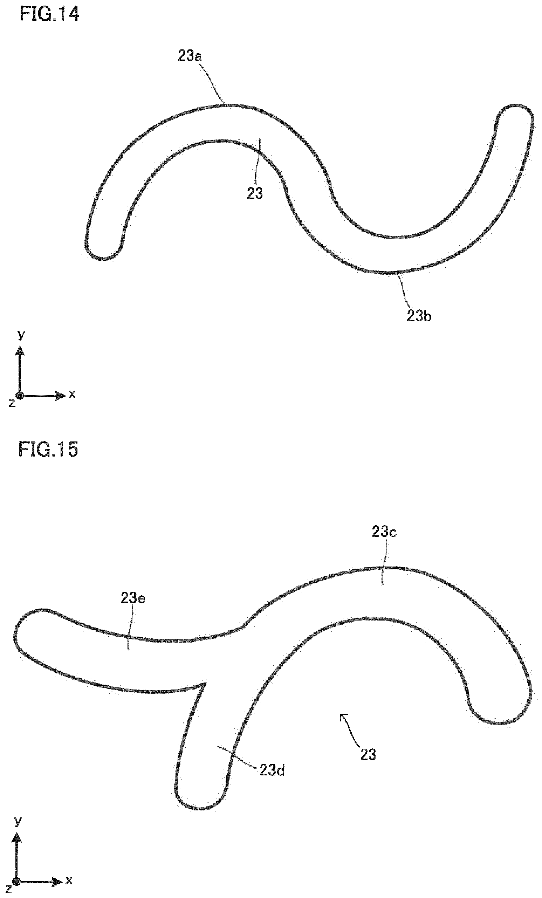

Thus, each of the concave striations 23 has a curved portion having a predetermined width $W_2$ with a finite length (width $W_2 > 0$), and such concave striations 23 may also include concave striations 23 in FIGs. 14 and 15 for example, in addition to the concave striation shown in FIG. 13.

Concave striation 23 shown in FIG. 14 is a so-called wave shape which is one example extending with one pole portion 23a having an inclination of 0 (corresponding to the maximum point to the minimum point in the curve), and a pole portion 23b which is a different pole portion from the pole portion 23a. Such wavy striation 23 may be included.

The preferred range of length, width, height, and radius-of-curvature for concave striation 23 having a wave shape is also as described for the concave striation 23 shown in FIG. 13.

The concave striation 23 shown in FIG. 15 has branches, and is an example having a first branch 23d from a base portion 23c which is one, and a second branch 23e. The concave striation 23 having such branches may be included.

Preferred ranges of width, height, and radius-of-curvature for concave striation 23 having branches are also as described for concave striation 23 shown in FIG. 13. On the other hand, for the length of the concave striation 23 having branches, each of the total length of the base portion 23c and the first branch 23d, and the total length of the base portion 23c and the second branch 23e may be in the range described in the concave striation 23 shown in FIG. 13.

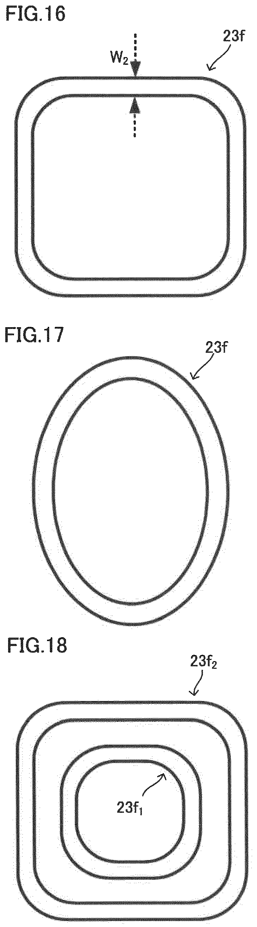

The planar view shape of the concave striation 23 may include a circle, ellipse, polygon in which the vicinity of the apex is rounded (radius of curvature > 0), or a closed curve 23f obtained by modulating them, as shown in FIGs. 16 to 19. Such closed curve 23f has a width $W_2$ in accordance with the above example.

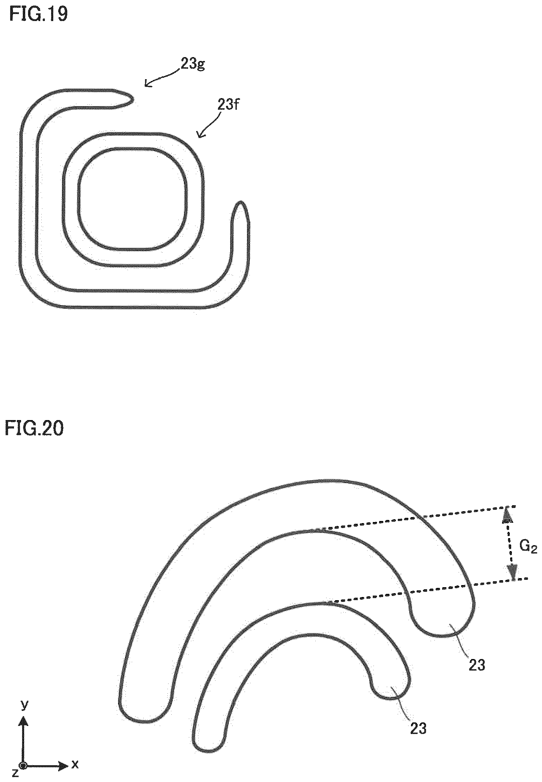

FIG. 16 is an example of the closed curve 23f made of a polygon or the like where the vicinity of the apex is rounded, and FIG. 17 is an example of the closed curve 23f made of an ellipse. Such closed curves may include a closed curve $23f_1$ having a smaller diameter inside a closed curve $23f_2$ having a larger diameter as shown in FIG. 18. Also, as in FIG. 19, the closed curve 23f may be accompanied by an open curve 23g having a larger diameter than that of the closed curve 23f and adjacent to the outside of the open curve 23f.

The concave striation 23 may have a shape in which a portion of the closed curve is cut off, such as 23g in FIG. 19. Alternatively, although not shown, the planar view shape of the concave striation 23 may include a meandering shape, or folded shape into a zig zag of the concave striations shown in FIGs. 16 to 19.

By arranging the concave striations 23 as described above on the surface of the base material 21 innumerably, the striated portion 22 is made. As for the arrangement of the plurality of concave striations 23 to the striated portion 22, any arrangement can be used as long as it can have fingerprint resistance as described above.

Although there is no particular limitation on the specific form for this purpose, as one example, the interval between adjacent concave striations 23 may be set to 1 $\mu$m to 70 $\mu$m, and may be set to 1 $\mu$m to 30 $\mu$m.

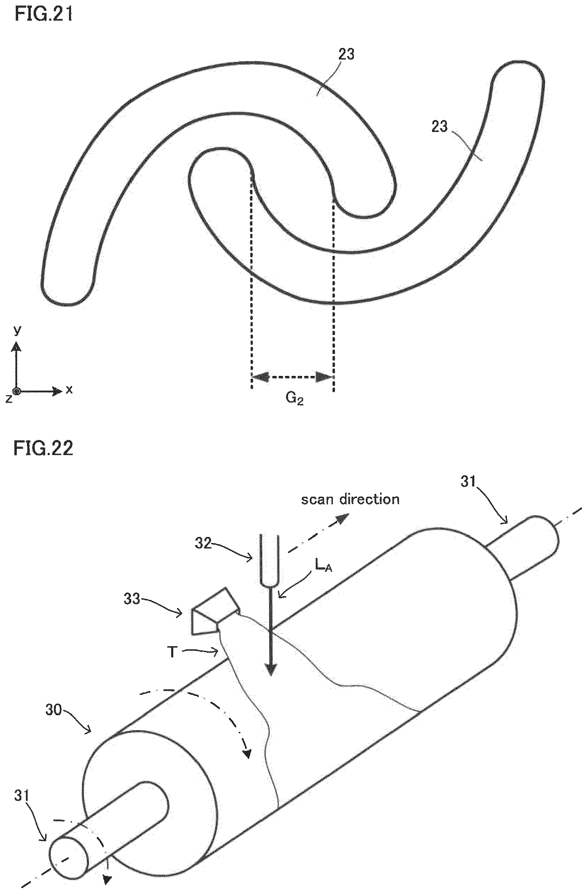

FIGs. 20 and 21 illustrates an example of an aspect of adjacent concave striations 23.

FIG. 20 is an example in which two of the concave striations 23 each curved are aligned so that their curved directions are aligned. In such a case, the most isolated distance shown in $G_2$ in FIG. 20 may fall within the range of the above intervals.

FIG. 21 is an example in which the curved directions of the two of the curved concave striations 23 are different from each other, and the tips are entered into the space made by each other's curve. In this case as well, the most isolated distance as shown in $G_2$ in FIG. 21 may fall within the range of the above intervals.

In addition, when the form of the plurality of concave striations 23 of the striated portion 22 and the arrangement thereof are viewed as a whole, it is also possible to form the plurality of concave striations 23 included in the striated portion 22 and the arrangement thereof may be formed by a so-called Turing pattern.

The Turing pattern is a spatial pattern spontaneously occurring in the system of the above equation, which is a reaction-diffusion equation, and can be considered in the same manner as described above.

Also, by the decorative material 20 described above, fingerprint resistance can be improved regardless of the material used for the decorative material. For example, even when a melamine resin is used as a material, the decorative material is excellent in fingerprint resistance.

Further, the surface of the decorative material can also be provided with a matte feature by the striated portion 22 as described above. Then, even the surface of the matte as described above has fingerprint resistance.

Although there is no particular limitation on the use of the decorative material represented by the decorative material 10 and the decorative material 20 described above, the use may include, for example, interior materials of buildings such as walls, floors, ceilings, and the like, exterior materials such as exterior walls of buildings, roofs, gate doors, walls, fences, and the like, surfacing materials of manufacturing members such as doors, window frames, door frames etc., surrounding edges, width woods, handrails, and the like, surfacing materials of housings for home electric appliances such as television image receivers, refrigerators, and the like, surfacing materials of furniture such as desks, tables, cabinets, and the like, surfacing materials of containers such as boxes, resin bottles, and the like, interior materials and exterior materials of vehicles and the like, interior and exterior materials of ships, and the like.

Next, a manufacturing method S10 which is an example of a method of manufacturing a decorative material will be described. However, the method of manufacturing a decorative material is not limited thereto. Here, a production of the decorative material 10 of the first embodiment will be described as an example. Since the decorative material 20 has a relationship in which the unevenness of the portion having striations is reversed as can be seen from the above, it is only necessary to form unevenness corresponding to the unevenness even in its manufacturing method, and the basic concept thereof is the same.

The manufacturing method S10 of the decorative material of this example includes a pattern making step S11, a die making step S12, a shaped sheet making step S13, and a shaping step S14. Hereinafter, each step will be described. In this example, an example will be described in which the form and arrangement of the convex striations 13 of the striated portion 12 are formed in a Turing pattern.

<Pattern Making Step S11>

In the pattern making step S11, a specific Turing pattern to be expressed in the striated portion 12 is formed by numerical simulation to generate pattern data, which is stored as digital data in a storage device.

<Die Making Step S12>

In the die making step S12, a die (mold for shaped sheet) having the same irregularities (differences in the height) as the irregularities formed on the striated portion 12 of the decorative material on the surface based on the Turing pattern obtained in the pattern making step S11 is made. Specifically, the manufacturing step of the irregularities includes the following procedures (1) to (5).

(1) Gray Scale Image Data Making Step

Digital gray scale image data corresponding to a planar view pattern of the convex striation 13 forming the striated portion 12 is made. The gray scale image data is data obtained by making the image density correspond to each coordinate of the surface of a metal roll described later. Here, gray scale image data can be generated at a resolution of 2540 dpi in a TIFF format in an 8-bit gray scale tone (256 tones), using the planar view pattern obtained in the pattern making step S11.

(2) Metal Roll Preparation Step

In parallel with the step (1) above, a metal roll 30 for engraving die as shown in FIG. 22 is prepared. The metal roll 30 is obtained by plating the surface of a hollow iron cylinder having a rotary drive shaft 31 at both axial ends with a copper layer. The surface of the metal roll 30 is roughened by polishing with a grinding stone, which is a treatment to prevent a decrease in engraving efficiency due to specular reflection of engraving laser beams.

(3) Laser Engraving Step

As shown schematically in FIG. 22, using a laser beam direct engraving machine, the surface of the metal roll 30 prepared in the step (2) is engraved on the basis of the gray scale image data created in the step (1). Thus, concavo-convex shapes which are the same shape of the irregularities of the surface of the decorative material in a planar view like in FIG. 1 and are sequential irregularities (relationship where the portion corresponding to the convex of the decorative material is convex on the surface of the die) are formed on the surface of the metal roll.

Therefore, the shape the irregularities should have in the die is the same aspect as the uneven relationship of the irregularities in the decorative material described above.

The metal roll 30 is driven by an electric motor via its rotary drive shaft 31, and rotates with the rotary drive shaft 31 as a central axis. The entire surface of the metal roll 30 is scanned with a fiber laser beam $L_A$ having an oscillation wavelength of 1024 nm, a laser spot diameter of 10 $\mu$m, and a power of 600 W emitted from the laser head 32. At that time, ON-OFF switching of the laser beam is performed in accordance with the density value of the gray scale image data made in the step (1) (switching of irradiation or non-irradiation), to form a concave portion having a depth of 10 $\mu$m by evaporation of the metal at one laser beam irradiation at the irradiation position. The scanning for the metal roll surface by such a laser beam is repeated ten times. Further, in order to prevent the evaporated metal from remaining or adhering to the surface of the metal roll 30 after the metal becomes a powder, the laser beam irradiation is performed with an engraving liquid T being sprayed from an engraving liquid discharge port 33 to a laser beam irradiation area of the surface of the metal roll 30.

At that time, for example, the laser beam irradiation is controlled so that a position coordinate of the image density corresponding to the plate depth 50 $\mu$m on the data is irradiated with laser light only at the first five scans (ON), and for the remaining five scans, laser light is controlled to be non-irradiated (OFF) in a total of ten scans.

With a completion of the scanning of such a laser beam, a desired concavo-convex shape is formed on the surface of the metal roll 20.

(4) Electropolishing Step

After cleaning the engraving liquid, electropolishing is performed to remove the residue of the metal adhering to the surface of the metal roll 30.

(5) Chrome Plating Step

After the step (4), a chromium layer having a thickness of 10 $\mu$m is formed on the metal roll surface by plating.

From the above steps, it is possible to obtain a die (mold for shaped sheet) having the same concavo-convex shapes as the irregularities formed on the surface of the striated portion 12 on the surface.

<Shaped Sheet Making Step S13>

In the shaped sheet making step S13, a coating ink containing an ionizing radiation-curable acrylate monomer is coated on an easy adhesive surface of a 2-axis oriented PET film using the die prepared, and the coating ink is subjected to ultraviolet irradiation and cured, whereby a shaped sheet is produced.

With this step, it is possible to obtain a shaped sheet which has concavo-convex shapes opposite to the irregularities formed on the surface of the striated portion 12 on the surface. Although the irregularities formed here are irregularities opposite to the irregularities of the convex striations 13 of the striated portion 12, the form and arrangement thereof can be considered in the same manner as described above.

<Shaping Step S14>

The shaping step S14 is carried out as follows.

First, an uncured composition in a liquid state of a thermosetting resin containing a melamine formaldehyde resin is impregnated into a titanium paper base paper so that an uncured composition has a predetermined ratio when it is dried, using an impregnation device, and the composition is dried, whereby, an impregnated decorative sheet is obtained.

Next, this impregnated decorative sheet is laminated on a phenol resin impregnated core paper in which a resin liquid made of a phenol resin is impregnated into a kraft paper, and the produced shaped sheet is further laminated on top of the prepared impregnated decorative sheet so that a printing surface of the shaped sheet is in contact with a printing surface of the impregnated decorative sheet.

The stack formed in this way is sandwiched by two metal mirror plates, and the stack is heated and molded under conditions of a predetermined temperature and time while applying pressure on the stack using a thermal pressing machine, and the uncured composition is thermally cured. In this way, a cured resin layer containing a melamine resin is formed.

Finally, the decorative material 10 is obtained by peeling the shaped sheet from the cured resin layer.

Examples

Decorative materials were prepared in accordance with the decorative material 10 and the manufacturing method S10 to obtain Examples 1 and 2. Further, Examples 3 and 4 were prepared in accordance with the decorative material 20 and the manufacturing method S10. A decorative material having no striated portion was prepared to be a Comparative Example.

[Shape and Production of Decorative Material of Examples]

Convex striations (Example 1 and Example 2) and concave striations (Example 3 and Example 4) of the striated portions provided in the decorative materials of Examples 1 to 4 are shaped and arranged in a Turing pattern.
Such decorative materials were produced as follows.
A Turing pattern was created in accordance with the pattern making step S11 to obtain a specific Turing pattern data. This particular Turing pattern is obtained by a simulation, as a numerical simulation, using the reaction diffusion equation of the improved type of young model proposed on page 3 of "A Simple Reaction-Diffusion Cellular Automaton Model generating Turing Patterns and its LSI Implementation for Restoring Stripe and Spot Images", Suzuki Yohei, Takayama Takahiro, N. Motoike Ikuko, the Institute of Electronics, Information and Communication Engineers, IEICE Technical Report.
In this reactive diffusing equation, the Turing pattern was generated with a ratio $Dv/Du$ of 6 wherein $Du$ is a diffusion coefficient of the active factor u and $Dv$ is a diffusion coefficient of the inhibition factor v and an offset C of the sigmoid function of 0.
Then, for the same pattern, the magnification of the pattern was adjusted so that the dimension data was distributed in such a way that the width W (In Examples 1 and 2, W corresponds to $W_1$, and in Examples 3 and 4, W corresponds to $W_2$) of the curved portion of the pattern falls in the range of 10 $\mu$m to 20 $\mu$m, the length L (in Examples 1 and 2, L corresponds Li, and in Examples 3 and 4, L corresponds to $L_2$) falls in the range of 5 $\mu$m to 100 $\mu$m, the radius-of-curvature R (in Examples 1 and 2, R corresponds to Ri, and in Examples 3 and 4, R corresponds to $R_2$) falls in the range of 1 $\mu$m to 50 $\mu$m, the distance G between adjacent convex striations or concave striations (in Examples 1 and 2, G corresponds to Gi, and in Examples 3 and 4, G corresponds to $G_2$) falls in the range of 20 $\mu$m to 30 $\mu$m. In this way, a planar view pattern data exhibiting a specific Turing pattern of a striation portion composed of a convex striation 13 (Example 1 and Example 2) and a concave striation 23 (Example 3 and Example 4) was prepared.
Next, a die for the shaped sheet was produced in accordance with the die making step S12.
Next, a shaped sheet was produced in accordance with the shaped sheet making step S13. Specifically, it is as follows.
A 50 $\mu$m thick PET-film (Cosmoshine (registered trademark) A4100 (50 $\mu$m) manufactured by Toyobo Corporation) was prepared.
Further, a coating ink containing 100 parts by mass of an ionizing radiation-curable monomer (manufactured by Toa Synthetic Co., Ltd., Aronix (registered trademark) M350), 2 parts by mass of a reactive silicone (manufactured by Shin-Etsu Chemical Co., Ltd., X-22-164B), 5 parts by mass of silica (manufactured by Fuji Silysia Chemical Ltd., Silica 450), and 50 parts by mass of ethyl acetate was also prepared.
The prepared coating ink was applied to the easy adhesive surface of the above PET film with the die prepared, and an electron beam irradiation of 5 Mrad was performed at an accelerating voltage of 165 kV, and cured to obtain a shaped sheet.
Next, the decorative materials according to Examples 1 to 4 were obtained in accordance with the shaping step S14. Specifically, it is as follows.
First, a liquid uncured composition of a thermosetting resin including 60 parts by mass of melamine formaldehyde resin, 35 parts by mass of water, and 5 parts by mass of isopropyl alcohol was prepared.
This uncured composition was impregnated into a titanium paper base paper with an impregnation apparatus. At this time, impregnation was performed so that the uncured composition had a ratio of 80 g/m$^2$ (dry) when dried. The composition was dried, then the impregnated decorative sheet was obtained.
Next, this impregnated decorative sheet was laminated on three sheets of phenolic resin impregnated core paper (Ota Co., Ltd., Ota Core) having a basis weight 245 g/m$^2$, in which a kraft paper was impregnated with a resin solution made of a phenolic resin.
Further, the produced shaped sheet was laminated on top of the impregnated decorative sheet so that the printing surface of the shaped sheet was in contact with the printing surface of the impregnated decorative sheet.
Thereafter, the formed stack was sandwiched by two mirror plates, and heated and molded by a thermal pressing machine at a pressure of 100 kg/cm$^2$ and at a molding temperature of 150 °C for 10 minutes to form a cured resin layer containing a melamine resin by thermally curing the uncured composition.
Finally, the shaped sheet was peeled from the cured resin layer, then the decorative materials according to Examples 1 to 4 were obtained.

[Shape and Production of Decorative Material of Comparative Example]

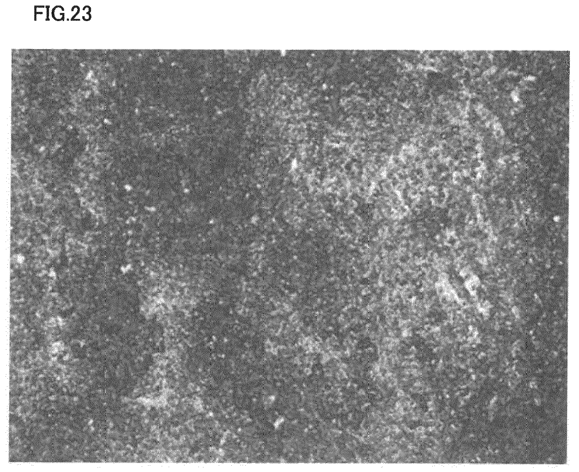

For the decorative material of Comparative Example, a so-called blast mat film, which does not have a striation projection portion, was used to produce a shaped sheet. Then, a decorative material was obtained with this shaped sheet in the same manner as in the decorative materials of Examples. FIG. 23 shows a plan view of an enlarged portion of the decorative material according to Comparative Example. FIG. 23 is a view seen from the same viewpoint and has the same scale as FIG. 1.

[Evaluation Methods and Results]

The length L, the width W, the height H (Example 1 and Example 2), the depth (Example 3 and Example 4), the radius-of-curvature R, and the interval of the convex striations or the concave striations were measured by the above-described method, and a quantitative evaluation of the gloss, the fingerprint resistance by visual observation, and the fingerprint resistance by the color difference ΔE of the decorative material was performed. Table 1 shows the dimensions and results.

Here, "length", "width", "radius-of-curvature", and "interval" were measured with an optical microscopic VHX-6000 of KEYENCE Corporation. "Height" and "depth" were measured with a two-dimensional, three-dimensional surface roughness measuring instrument of Ryokosha Co., Ltd. The "length", "width", "height", "radius-of-curvature", and "interval" were measured at five shaped sheets of each level (Examples 1 to 4, and Comparative Example), 10 points from each shaped sheet, and the total number of data N=50.

"Gloss" was measured by a gloss meter (60 degrees, measuring instrument from BYK Gardner Gmbh, Microgloss).

"Fingerprint resistance (visual observation)" was defined as "◎" when the surface of the decorative material had high fingerprint resistance, "o" when the surface of the decorative material had fingerprint resistance, and "×" when the surface had a low fingerprint resistance, when the surface was touched by a finger and visually observed.

"Fingerprint resistance (colorimetric ΔE values)" was obtained by measuring the $\Delta E^*ab$ by a spectrophotometer CM-370 of Konica Minolta Corporation as described above.

[Table 1]

(Table 1)

| Category | Example 1 | Example 2 | Exmple 3 | Example 4 | Comparative Example |
|---|---|---|---|---|---|
| Length L($\mu$m) | 23-163 | 87-413 | 23-163 | 87-413 | - |
| Width W($\mu$m) | 5-17 | 13-65 | 5-17 | 13-65 | - |
| Height H($\mu$ m) | 15-35 | 15-35 | - | - | 6-8 |
| Depth F($\mu$ m) | - | - | - 15-35 | 15-35 | |
| Radius-of-curvature R ($\mu$m) | 2-14 | 17-38 | 2-14 | 17-38 | - |
| Interval G($\mu$m) | 4-11 | 15-50 | 4-11 | 15-50 | |
| Gloss (60°) | 1.5-2 | 2-2.5 | 1.5-2 | 2-2.5 | 1.5-2 |
| Fingerprint resistance (visual observation) | ◎ | ○ | ◎ | ○ | × |
| Fingerprint resistance (colorimetrio Δ E values) | 0.11 | 0.97 | 0.11 | 0.97 | 1.57 |

As can be seen from the results, the decorative materials according to Examples 1 to 4 were superior to the decorative materials of Comparative Examples both visually and quantitatively in terms of fingerprint resistance.

References Signs List

10, 20 decorative material
11, 21 base material
12, 22 striated portion
13 convex striation
23 concave striation

**Claims**

1.  A decorative material provided with irregularities formed on a surface, the decorative material comprising:

    a base material, and
    a striated portion in which a plurality of convex striations or concave striations are arranged on a surface of the base material,
    wherein each of the convex striations or each of the concave striations has a finite length in a planar view, and has a curved portion, and
    the plurality of convex striations or concave striations of the striated portion have a pattern to have a fingerprint resistance represented by a color difference $\Delta E$ of 1.50 or less.

2.  The decorative material according to claim 1, wherein the plurality of convex striations or concave striations of the striated portion have a Turing pattern.

3.  The decorative material according to claim 1 or 2, wherein the base material and the striated portion comprise a melamine resin.

4.  A method for manufacturing the decorative material according to any one of claims 1 to 3, the method comprising:

    a step of forming gray scale image data of the pattern of the convex striations or the concave striations to be represented in the decorative material;
    a step of making a die having the same pattern of convex striations or concave striations as the pattern of the convex striations or the concave striations on the basis of the gray scale image data;
    a step of making a shaped sheet by applying an ink on a side where the convex striations or the concave striations are provided and curing the ink; and
    a step of laminating the shaped sheet on a sheet impregnated with a resin and heating and molding the sheets while applying a pressure to the sheet.

FIG.1

FIG.2

FIG.3

FIG.4

FIG.5

FIG.6

FIG.7

13f

FIG.8

13f$_2$

13f$_1$

FIG.9

13g

13f

FIG.10

FIG.11

FIG.12

FIG.13

FIG.14

FIG.15

FIG.16

$W_2$

23f

FIG.17

23f

FIG.18

23f₂

23f₁

FIG.19

23g

23f

FIG.20

$G_2$

23

23

y

z

x

FIG.21

FIG.22

FIG.23

## INTERNATIONAL SEARCH REPORT

| | International application No. |
|---|---|
| | PCT/JP2019/014522 |

### A. CLASSIFICATION OF SUBJECT MATTER
Int. Cl. B29C59/02(2006.01)i, B29C59/04(2006.01)i

According to International Patent Classification (IPC) or to both national classification and IPC

### B. FIELDS SEARCHED

Minimum documentation searched (classification system followed by classification symbols)
Int. Cl. B29C59/02, B29C59/04

Documentation searched other than minimum documentation to the extent that such documents are included in the fields searched

```
Published examined utility model applications of Japan      1922-1996
Published unexamined utility model applications of Japan    1971-2019
Registered utility model specifications of Japan            1996-2019
Published registered utility model applications of Japan    1994-2019
```

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-530403 A (UNI-PIXEL DISPLAYS,INC.) 22 | 1-3 |
| Y | December 2011, claims, paragraphs [0002], [0016], [0035] & US 2010/0033818 A1, claims, paragraphs [0003], [0049], [0068] & WO 2010/017503 A1, claims, paragraphs [0002], [0048], [0067] & EP 2328695 A1 & CN 102143810 A & KR 10-2011-0053333 A & TW 201026591 A | 1-4 |
| Y | JP 2009-191284 A (KANSAI PAINT CO., LTD.) 27 August 2009, paragraph [0071] (Family: none) | 1-4 |
| Y | JP 04-065237 A (DAINIPPON PRINTING CO., LTD.) 02 March 1992, page 3, lower left column, lines 9-20 (Family: none) | 4 |

☐ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10.05.2019 | 21.05.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**EP 3 778 188 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S58197053 A